# EUROPEAN PATENT APPLICATION

(11) **EP 1 104 194 A1**
(43) Date of publication of application: **30.05.2001**
(21) Application number: 99650110.2
(22) Date of filing: 23.11.1999
(51) Int. Cl.: H04N 7/18

(54) **A communications device**

(71) Applicant: Remotewatch R&D Limited, Dublin 14 (IE)
(72) Inventor: Lysacht, Ronald, Booterstown, County Dublin (IE); Daly, Paul, Blackrock, County Dublin (IE); Mooney, Derek, Dublin 14 (IE); Maloney, Patrick, County Dublin (IE); Cullen, Derek, Leopardstown Heigths Dublin 18 (IE)
(74) Representative: McCarthy, Denis Alexis

(57) **Abstract**

The invention discloses a communications device (1), in particular communications device for use in a closed circuit television (CCTV) system monitoring a remote site. The device (1) does not require a local computer on site thereby increasing overall relaiability and decreasing cost. The device has a telephone connection (2) for transmission of time stamped processed composite video signals received from cameras (CC) to a viewing screen (S) at location remote from the device (1). The device can be readily adapted to accommodate a large number of cameras (CC) by using a breakout unit (BOU) or a direct camera (CC) connection at each port (7) of the device (1) The breakout unit being adapted to multiplex a number of cameras to a single port (7).

## Description

The present invention relates to a communications device and more particularly to a communications device for use in a closed circuit television (CCTV) system.

A variety of CCTV systems are known. For example, one currently available system allows monitoring of four video inputs from a CCTV camera system on a single computer screen. By highlighting one of four video icons on the screen, a user can create a window to monitor a location covered by one of the four CCTV cameras. The monitoring image may be displayed in black and white or using up to sixteen million colours. The size of the window may be adjusted and be can positioned as desired on the screen. It is possible to monitor up to four different locations simultaneously, by creating four video windows or by opening a quad window. Systems of this type are also frequently capable of performing the operations of a digital video recorder. In such systems, when an intruder enters a protected area and a sensor is triggered, the computer records images received, while the alarm is in effect. The computer can then be used as a digital video player to playback the recorded video or browse frame by frame. A connected printer can then be used to create a hard copy of a frame.

The use of CCTV systems is also known for remote monitoring of a site. This is achieved by instructing the computer to automatically place a call when an alarm is triggered. Video data is then sent via modem to a computer at the users remote destination. The received images may be used to verify the alarm condition. Additionally, it is possible to dial the monitoring computer from a remote computer to observe the monitored site location.

Systems of these types overcome many of the problems inherent in older security systems. Before the introduction of these systems, the security of a site depended on intricate wiring, permanent camera installation points and high-priced software or CCTV programs to project live images to users. Many sites and in particular large manufacturing facilities did not have the wiring facilities for a wired surveillance network and therefore the provision of remote monitoring surveillance systems was a significant improvement.

Notwithstanding the advances in security that this has permitted, applications of such systems are limited. These limitations are largely cost related. As a computer is required at the monitored site to process images from the various CCTV units commissioning costs can be excessive. The use of the computer also calls into question the reliability of the overall system. Furthermore the transmission speeds required for remote monitoring are such that a high speed, bandwidth hungry, connection is required. Connections such as an ISDN switch have been proposed, however, these connections are not financially justifiable except on sites where the potential loss due to theft is great.

There is therefore a need for a communications device, which will overcome these problems.

Accordingly there is provided a communications device for monitoring a remote site of the type having a plurality of cameras and a viewing screen characterized in that the device has a telephone connection for transmission of time stamped processed composite video signals received from the cameras to the viewing screen at location remote from the device.

Ideally, the device has a plurality of camera ports each having an eight-position jack and being formed for receiving a breakout unit or a direct camera connection.

Preferably, the breakout unit in turn has eight breakout camera ports having a unique code to multiplex each breakout camera port.

In a particularly preferred arrangement, the device incorporates a software connection utility to enable control from a remote computer using custom icons

The invention will be more clearly understood from the following description of an embodiment thereof given by way of example only with reference to the accompanying drawings in which: -
Fig. 1 is a perspective view of a communications device in accordance with the invention; and
Fig. 2 is a block diagram of a monitoring system incorporating the device of Fig. 1.

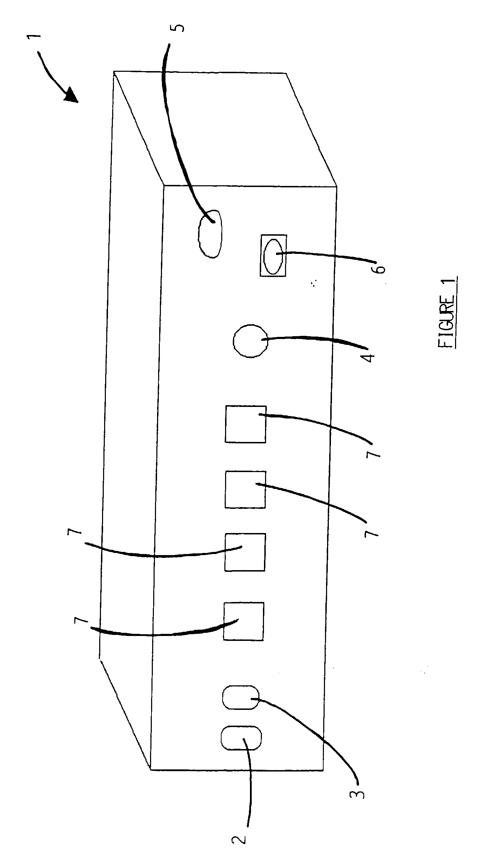

Referring to the drawings and initially to Fig. 1 there is shown a communications device in accordance with the invention indicated generally by the reference numeral 1. The device 1 has a telephone connection 2 and a direct computer connection 3 for onward transmission of processed video signals from the device 1 to a computer (not shown). The device 1 also has a power input 4 for receiving a +5V DC signal at 1 Amp. This power input derived from an adapter plugged directly into a wall or from a power strip with surge suppression. The device 1 has a power indicator light 5 and a reset switch 6.

Visual monitoring of a site is achieved by connecting a camera to a camera port 7. There are four such ports 7, each having an eight-position jack. Each of the ports 7 is formed for receiving a breakout unit (not shown) or a direct camera connection. The device 1 will thus support up to four cameras or four breakout units or any combination of the two. The breakout unit in turn has eight breakout camera ports. Each breakout unit uses special code and hardware to multiplex each port so that it will support up to eight cameras each camera being connected to a breakout camera port. Therefore, with four breakout units connected to the ports 7, the device 1 will support up to thirty-two cameras. Internal code recognizes through the hardware if there is a camera or a breakout unit connected to the port 7. When the code determines there is a breakout unit, it will control multiplex signals to select individual cameras through the breakout unit.

The device 1 supports a wide range of cameras, which will vary by cost and quality and will operate with all kinds of composite video cameras. The cameras may be PAL or NTSC. The cameras may be CMOS or CCD technologies. The cameras may be designed for indoor, outdoor uses or even night vision.

Register decoding of the device 1 is: -
- Bit 0 =: Port 1, bit 5 of eight position phone jack. Low (0) = expansion box, High (1) = camera.
- Bit 1 =: Port 2, bit 5 of eight position phone jack. Low (0) = expansion box, High (1) = camera.
- Bit2=: Port 3, bit 5 of eight position phone jack. Low (0) = expansion box, High (1) = camera.
- Bit 3 =: Port 4, bit 5 of eight position phone jack. Low (0) = expansion box, High (1) = camera.

Register selection for the device 1 is: -
Bit 2,1,0 = Multiplex selection of expansion Unit per port
000 = Camera 1
001 = Camera 2
010 = Camera 3
011 = Camera 4
100 = Camera 5
101 = Camera 6
110 = Camera 7
111 = Camera 8

Pin connections for the ports 7 are: -

| Pin | Description |
|---|---|
| 1 | CV+ |
| 2 | Power Ground |
| 3 | +5VDC |
| 4 | special function |
| 5 | Ground if Breakout unit. Pull up resistor available. |
| 6,7,8 | 1:8 multiplex selector for camera. |

Pin 1 of eight-position phone jack to pin 1 (conductor) of COAX cable

Pin 2 of eight-position phone jack to pin 2 (Shield) of COAX cable

Video Image Description: -
888RGB data, 24 Bit, CCIR-601
R= Y + 1.371Cr
G= Y - 0.336Cb - 0.698Cr
B= Y + 1.732 Cb

Hardware will transfer the image into memory. Size based on PAL or NTSC.

Code for a local processor of the device 1 resides in non-volatile FLASH memory so that the code is not lost when power is turned off. When firmware updates are needed, the software, utilizing a proprietary protocol, may be used to download new code into the unit.

The unit may be password protected under software control. The password is stored in the FLASH memory so that it is not lost when power is turned off.

The device 1 contains DRAM memory for code execution.

The unit contains shared SRAM memory for bringing in camera images.

A modem to used to connect the unit to the phone line. The modem answers incoming calls and handshakes with the product software for connection. The unit will auto answer and connect the user when a password is validated.

A direct connection port is available to operate the unit directly from a PC without using a phone line.

A software connection utility will enable the user to dial out or directly control the device 1 from a remote computer. This utility will allow the user to connect to the modem, name the cameras, select the cameras, scan cameras, update images, set picture quality, save images, and playback images. Images may be printed or used by other programs that accept JPEG format. When the utility is activated a viewing window is initiated detailing custom icons, each icon initiates a separate function in the device 1. Operation of these icons initiates connection is made or selection of picture images Operation of the icons can be effected to select: -
Next Camera
Current camera one time.
All cameras one time.
All cameras continuously.
Selected cameras one time.
Selected cameras continuously.
Select specific cameras.
Update Image Delay (Delay in seconds with default set to 0)
Picture quality settings (May be saved or restored to default values).
Save images (Set to a specified number or canceled at any time).
Playback (Plays back image folders selected from images saved using saved images into file folders).

All images are time stamped in a unique format and saved in image folders that may be renamed.

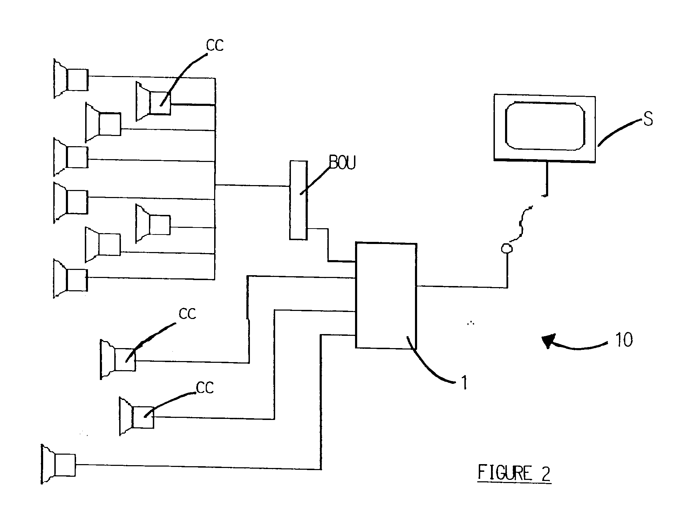

Referring now to Fig. 2, the device 1 is shown in use in a system indicated generally by the reference numeral 10. The device 1 is shown connected between a viewing screen (S) and eleven composite cameras (CC). Eight of the cameras (CC) are connected to a breakout unit (BOU) which is in turn connected to a port 7 of the device 1. The remaining cameras (CC) are connected directly to the device 1.

It will of course be understood that the invention is not limited to the specific details described herein, which are given by way of example only, and that various modifications and alterations are possible within the scope of the invention.

## Claims

1. A communications device (1) for monitoring a remote site of the type having a plurality of cameras (CC) and a viewing screen (S), characterized in that the device has a telephone connection (2) for transmission of time stamped processed composite video signals received from the cameras (CC) to the viewing screen (S) at location remote from the device (1).

2. A communications device as claimed in claim 1 having a plurality of camera ports (7) each having an eight position jack and being formed for receiving a breakout unit (BOU) or a direct camera (CC) connection.

3. A communications device as claimed in claim 2 in which the breakout unit has eight breakout camera ports having a unique code to multiplex each breakout camera port.

4. A communications device as claimed in any preceding claim incorporating a software connection utility to enable control from a remote computer using custom icons
